# EUROPÄISCHE PATENTSCHRIFT

(11) **EP 2 040 935 B1**
(45) Veröffentlichungstag und Bekanntmachung des Hinweises auf die Patenterteilung: **15.05.2013**
(21) Anmeldenummer: 07765539.7
(22) Anmeldetag: 21.06.2007
(51) Int. Cl.: B42D 15/10, G06K 19/07, G06K 19/10, G06K 19/077, G06K 19/02

(54) **WERT- ODER SICHERHEITSDOKUMENT MIT EINER ANZEIGEVORRICHTUNG**
VALUABLE DOCUMENT OR SECURITY DOCUMENT COMPRISING A DISPLAY DEVICE
DOCUMENT DE VALEUR OU DE SÉCURITÉ COMPRENANT UN DISPOSITIF D'INDICATION

(30) Priorität: 05.07.2006 DE 102006031422
(43) Veröffentlichungstag der Anmeldung: 01.04.2009
(73) Patentinhaber: Bundesdruckerei GmbH, 10958 Berlin (DE)
(72) Erfinder: FISCHER, Joerg, 13053 Berlin (DE); PAESCHKE, Manfred, 16348 Wandlitz (DE); PFLUGHOEFFT, Malte, 13347 Berlin (DE)
(74) Vertreter: Richardt Patentanwälte GbR
(86) Internationale Anmeldenummer: PCT/EP2007/056196
(87) Internationale Veröffentlichungsnummer: WO 2008/003595

(56) Entgegenhaltungen:
- WO-A-01/13331
- DE-A1- 10 344 384
- US-A1- 2006 115 110

## Beschreibung

Die Erfindung betrifft ein Wert- oder Sicherheitsdokument mit einer Anzeigevorrichtung sowie ein Kommunikationsverfahren für ein Wert- oder Sicherheitsdokument und ein Gerät für ein Wert- oder Sicherheitsdokument, insbesondere ein Lese- oder Schreibgerät.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als sogenannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Desweiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Chipkarten können eine integrierte Anzeigevorrichtung aufweisen, wie es z.B. aus EP 0920675, WO2004/080100 und US 6,019,284 bekannt ist.

Zum Beispiel aus der US 6,019,284 und der EP 0 920 675 sind flexible Karten mit Display bekannt. Diese Karten haben jedoch nur ein einziges Anzeigeelement. Aus der US 6,340,965 B1 ist ferner elektronisches Papier bekannt, durch welches ein wieder verwendbares Formular gebildet wird.

Eine Anzeigevorrichtung ist in US 2006/0115 110 A1 offenbart.

Von der Firma AU Optronics ist ferner ein zweiseitiges OLED-Display vorgestellt worden, das auf seiner Vorder- und Rückseite unabhängig voneinander zwei Farbbilder darstellen kann. Solche Displays sind für die Anwendung in Handys vorgesehen.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO) (http://www.icao.int/mrtd/download/documents/TR-PKI%20mrtds%20ICC%20read-only%20access%20v1 1.pdf)

Aus dem Stand der Technik sind ferner Verfahren bekannt, Daten unter kryptografischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 normiert sind. Zu den Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erhofft wird.

Der Erfindung liegt demgegenüber die Aufgabe zugrunde, ein weiteres Wert- oder Sicherheitsdokument zu schaffen sowie ein Kommunikationsverfahren für ein Wert- oder Sicherheitsdokument und ein Gerät, insbesondere ein Lesegerät und/oder Schreibgerät, für ein Wert- oder Sicherheitsdokument.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Wert- oder Sicherheitsdokument mit einer Anzeigevorrichtung zur Ausgabe eines maschinenlesbaren optischen Signals geschaffen. Das maschinenlesbare optische Signal ist durch einen Benutzer nicht kognitiv erfassbar. Die Erfindung ermöglicht es also, Daten verschiedener Art auf optischen Wegen aus dem Wert- oder Sicherheitsdokument auszugeben, wie zum Beispiel kryptographische Schlüssel, verschlüsselte und/oder signierte Informationen, Transaktionsnummern, Bar-Codes, eine Gültigkeitsdauer, Berechtigungsinformationen, Personalisierungsdaten oder dergleichen.

Erfindungsgemäß wird dadurch eine Alternative zu vorbekannten Wert- oder Sicherheitsdokumenten geschaffen. Im Vergleich zu vorbekannten Wert- oder Sicherheitsdokumenten, bei denen die Signalausgabe über Radiowellen erfolgt, haben Ausführungsformen der Erfindung den Vorteil, dass eine Datenausgabe aus dem Wert- oder Sicherheitsdokument nicht unbemerkt erfolgen kann. Dies ist insbesondere für solche Dokumente vorteilhaft, welche nicht wie z.B. maschinenlesbare Reisedokumente (Machine Readable Travel Documents - MRTDs) mittels normierter Verfahren abgesichert sind.

Erfindungsgemäß dient die Anzeigevorrichtung neben der Ausgabe des maschinenlesbaren optischen Signals und vorzugsweise der Anzeige von Daten auch zur Erfassung eines optischen Signals. Beispielsweise wird das optische Signal von einem Lese- und/oder Schreibgerät gesendet und mit Hilfe der Anzeigevorrichtung durch das Wert- oder Sicherheitsdokument empfangen. In diesem Fall kann mit Hilfe der Anzeigevorrichtung eine bidirektionale Kommunikation mit dem Schreib- und/oder Lesegerät erfolgen.

Ausführungsformen der Erfindung sind ferner hinsichtlich einer verbesserten Fälschungssicherheit und einer verbesserten Sicherheit gegen Manipulationen gegenüber dem Stand der Technik vorteilhaft. Die Ausführung eines Wert- oder Sicherheitsdokuments mit einer Anzeigevorrichtung zur Ausgabe eines maschinenlesbaren optischen Signals, welches durch einen Benutzer nicht kognitiv erfassbar ist, ist nämlich kaum durch einen Fälscher kopier- oder manipulierbar.

Nach einer Ausführungsform der Erfindung ist das maschinenlesbare optische Signal für einen Benutzer visuell nicht wahrnehmbar, beispielsweise aufgrund der Frequenz des optischen Signals. Alternativ ist das optische Signal zwar visuell wahrnehmbar, beispielsweise als 2D-Bar-Code, kann aber dennoch nicht kognitiv von einem Benutzer erfasst werden oder Informationen sind in z.B. einem angezeigten Bild integriert versteckt, beispielsweise in Form eines digitalen Wasserzeichens.

Nach einer Ausführungsform der Erfindung ist die Anzeigevorrichtung neben der Ausgabe des maschinenlesbaren optischen Signals zur Anzeige von Daten zur kognitiven Erfassung durch einen Benutzer ausgebildet. Beispielsweise werden also auf der Anzeigevorrichtung Daten im Klartext angezeigt, die ein Benutzer visuell erfassen und ohne Weiteres verstehen kann.

Nach einer Ausführungsform der Erfindung ist die Anzeigevorrichtung als Photolumineszenz-Löschungsanzeige, eine elektrophoretische Anzeige, eine elektrochrome Anzeige, eine Flüssigkeitskristallanzeige (LCD), LED-Anzeige, insbesondere anorganische LED oder organische LED-Anzeige (OLED), Drehelementanzeige, Balkenanzeige oder einer Anzeige auf Basis des Elektrowetting-Effektes oder eine Hybridanzeige ausgebildet.

Insbesondere eine Photolumineszenz-Löschungsanzeige ermöglicht neben der Ausgabe des maschinenlesbaren optischen Signals und der Anzeige von Daten auch die Erfassung eines optischen Signals. Photolumineszenz-Löschungsanzeigen basieren beispielsweise auf Fluoreszenz-Anzeigeelementen, die neben ihrer Anzeigefunktion auch zur Signalerfassung dienen. Entsprechende Anzeigevorrichtungen und Verfahren, insbesondere betreffend so genannte Field Quenching Photoluminescence Emission Devices (FQPEDs) sind beispielsweise bekannt aus DE 10042974 A1, DE 10313805 B4, EP 01385338 A1, EP 01391868 A1, EP 01443093 A1, EP 01478024 A1, EP 01478026 A2, US 06667729 B2, US 24017148 A1, US 25287899 A1, DE 10042974 A1, DE 10359881 A1 und EP 01662305 A2.

Nach einer Ausführungsform der Erfindung handelt es sich bei der Anzeigevorrichtung um eine segmentierte Anzeige, beispielsweise eine Anzeigevorrichtung mit Wort- und Bitleitungen zur Ansteuerung einzelner Segmente. Nach einer weiteren Ausführungsform handelt es sich bei der Anzeigevorrichtung um ein Segmentdisplay, eine Aktiv - oder Passivmatrix.

Nach einer Ausführungsform der Erfindung ist die Anzeigevorrichtung zur Ausgabe von einem oder mehreren der maschinenlesbaren optischen Signale für eine serielle und/oder parallel Datenübertragung ausgebildet. Die Modulation des optischen Signals erfolgt dabei beispielsweise durch Amplituden-, Pulsweiten-, Phasen- und/oder Frequenzmodulation.

Nach einer Ausführungsform der Erfindung hat das Wert- oder Sicherheitsdokument eine Ansteuerschaltung für die Anzeigevorrichtung, wobei die Ansteuerschaltung als Treiber zur Ansteuerung der Anzeigevorrichtung für die Ausgabe des maschinenlesbaren optischen Signals und/oder für die Anzeige der Daten als auch für die Ansteuerung der Anzeigevorrichtung für die optische Signalerfassung dient.

Nach einer Ausführungsform der Erfindung hat das Wert- oder Sicherheitsdokument einen integrierten elektronischen Schaltkreis zur Ansteuerung der Anzeigevorrichtung und zur Modulation des maschinenlesbaren optischen Signals. Insbesondere kann der integrierte elektronische Schaltkreis zum Zugriff auf einen Datenspeicher des Wert- oder Sicherheitsdokuments dienen, um aus diesem Datenspeicher ausgelesene Daten oder auf der Basis dieser Daten generierte weitere Daten in der Form eines maschinenlesbaren optischen Signals und/oder im Klartext über die Anzeigevorrichtung auszugeben.

Nach einer Ausführungsform der Erfindung hat das Wert- oder Sicherheitsdokument einen integrierten elektronischen Schaltkreis zur Durchführung eines kryptographischen Protokolls, wobei die Ausgabe des maschinenlesbaren optischen Signals und/oder die Anzeige der Daten auf der Anzeigevorrichtung von der vorherigen erfolgreichen Durchführung des kryptographischen Protokolls abhängt. Dadurch ist gewährleistet, dass eine Ausgabe bzw. Anzeige über die Anzeigevorrichtung nur bei Vorliegen einer entsprechenden Berechtigung erfolgt.

Nach einer Ausführungsform der Erfindung wird durch die Anzeigevorrichtung eine Information empfangen oder gesendet, d.h. auf der Anzeigevorrichtung dargestellt, die für die Durchführung des kryptographischen Protokolls verwendet wird. Bei der Information kann es sich um eine Kennung, ein Chiffrat, einen kryptographischen Schlüssel oder dergleichen handeln. Beispielsweise wird auf der Grundlage dieser Information ein Challenge-Response-Verfahren oder dergleichen durchgeführt.

Nach einer Ausführungsform der Erfindung handelt es sich bei dem Dokument um ein Ausweisdokument, insbesondere einen Personalausweis, einen Reisepass, ein Visum oder einen Firmenausweis, eine Kreditkarte, einen Führerschein, einen Berechtigungsnachweis oder dergleichen.

Nach einer Ausführungsform der Erfindung handelt es sich um ein papierbasiertes Dokument oder eine Chipkarte.

Nach einer Ausführungsform der Erfindung hat das Wert- oder Sicherheitsdokument eine Schnittstelle zur Energieversorgung der Anzeigevorrichtung, des integrierten elektronischen Schaltkreises und/oder der Ansteuerschaltung. Die Schnittstelle ist kontaktbehaftet, kontaktlos oder als Dual-Interface-Schnittstelle ausgebildet.

Beispielsweise hat die Schnittstelle eine Antenne, insbesondere eine RFID-Antenne, zur Einkopplung der elektrischen Energie von einem externen Schreib- und/oder Lesegerät. Alternativ oder zusätzlich kann das Wert- oder Sicherheitsdokument aber auch über eine integrierte Energieversorgung, wie zum Beispiel eine Batterie, eine Photozelle oder dergleichen verfügen.

Nach einer Ausführungsform der Erfindung wird die Anzeigevorrichtung zur Anzeige und/oder Ausgabe in Form des maschinenlesbaren Signals von zeitlich veränderlicher Information angesteuert. Hierbei kann es sich um Informationen handeln, die sich in Abhängigkeit von der Zeit und/oder dem Datum ändert, oder um sich zyklisch ändernde Information.

In einem weiteren Aspekt betrifft die Erfindung ein Kommunikationsverfahren für ein Wert- oder Sicherheitsdokument, wobei eine Datenausgabe durch Ausgabe eines maschinenlesbaren optischen Signals über eine Anzeigevorrichtung des Wert- oder Sicherheitsdokuments erfolgt, wobei das maschinenlesbare optische Signal durch einen Benutzer nicht kognitiv erfassbar ist.

Erfindungsgemäß dient die Anzeigevorrichtung ferner zur optischen Signalerfassung. Beispielsweise kann mit Hilfe der Anzeigevorrichtung eine Information für die Durchführung eines kryptographischen Protokolls erfasst werden, wobei die erfolgreiche Durchführung des kryptographischen Protokolls eine Bedingung für die Ausgabe des maschinenlesbaren optischen Signals und/oder der Anzeige von Daten im Klartext über die Anzeigevorrichtung sein kann.

Nach einer Ausführungsform der Erfindung dient die Anzeigevorrichtung neben der Ausgabe des maschinenlesbaren optischen Signals auch zur Anzeige von Daten zur kognitiven Erfassung durch einen Benutzer, d.h. beispielsweise im Klartext.

Nach einer Ausführungsform der Erfindung ist die Anzeigevorrichtung als Photolumineszenz-Löschungsanzeige (Field Quenching Photoluminescence Emission Device - FQPED) ausgebildet. Zur Anregung z.B. der Fluoreszenz-Anzeigeelemente wird das Wert- oder Sicherheitsdokument mit einer hierzu geeigneten Strahlung beaufschlagt.

Im Weiteren werden Ausführungsbeispiele der Erfindung mit Bezugnahme auf die Zeichnungen näher erläutert. Es zeigen:
Figur 1 einen schematischen Aufbau einer Ausführungsform eines erfindungsgemäßen Wert- oder Sicherheitsdokuments,
Figur 2 einen schematischen Querschnitt einer Ausführungsform eines erfindungsgemäßen Wert- oder Sicherheitsdokuments für eine unidirektionale Datenübertragung,
Figur 3 einen schematischen Querschnitt einer Ausführungsform eines erfindungsgemäßen Wert- oder Sicherheitsdokuments für eine bidirektionale Datenübertragung,
Figur 4 einen schematischen Querschnitt einer Ausführungsform eines erfindungsgemäßen Wert- oder Sicherheitsdokuments mit einer zusätzlichen Strahlungsquelle,
Figur 5 ein Blockdiagramm einer Ausführungsform eines erfindungsgemäßen Wert- oder Sicherheitsdokuments und eines dafür vorgesehenen Lese- und/oder Schreibgeräts,
Figur 6 eine Draufsicht auf eine Ausführungsform eines erfindungsgemäßen Wert- oder Sicherheitsdokuments bei gleichzeitiger Anzeige von Daten zur kognitiven Erfassung und Ausgabe von maschinenlesbaren optischen Signalen,
Figur 7 ein Flussdiagramm einer Ausführungsform eines erfindungsgemäßen Verfahrens.

Elemente der nachfolgenden Ausführungsformen, die einander entsprechen, sind mit denselben Bezugszeichen gekennzeichnet.

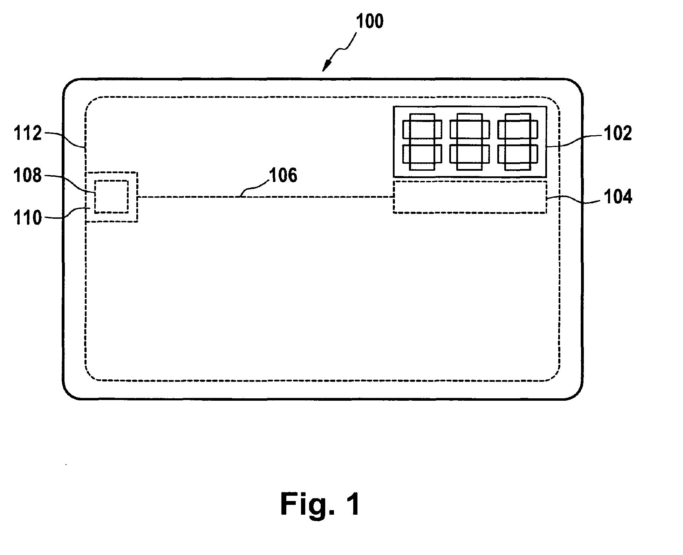

Die Figur 1 zeigt eine Ausführungsform eines erfindungsgemäßen Dokuments 100. Bei dem Dokument 100 handelt es sich um ein Wert- oder Sicherheitsdokument, wie zum Beispiel ein Ausweisdokument, insbesondere einen Personalausweis, einen Reisepass, ein Visum oder einen Firmenausweis, eine Kreditkarte, einen Führerschein, einen Berechtigungsnachweis oder dergleichen

In der hier betrachteten Ausführungsform hat das Dokument 100 eine einzige Anzeige 102, wie zum Beispiel eine Photolumineszenz-Löschungsanzeige, eine elektrophoretische Anzeige, eine elektrochrome Anzeige, eine Flüssigkeitskristallanzeige (LCD), LED-Anzeige, insbesondere anorganische LED oder organische LED-Anzeige (OLED), Drehelementanzeige, Balkenanzeige oder einer Anzeige auf Basis des Elektrowetting-Effektes oder eine Hybridanzeige.

Zur Ansteuerung der Anzeige 102 dient ein Treiber 104. Der Treiber 104 ist über eine Datenleitung 106 mit einem integrierten elektronischen Schaltkreis 108 verbunden. Der Treiber 104 kann auch einen integralen Bestandteil des integrierten elektronischen Schaltkreises 108 bilden.

Der integrierte elektronische Schaltkreis 108 kann sich in einem so genannten Modul 110 befinden, insbesondere einem Chipkartenmodul. Durch das Modul 110 wird eine kontaktbehaftete oder kontaktlose Schnittstelle oder eine Dual-Interface-Schnittstelle für die Kommunikation mit dem integrierten Schaltkreis 108 gebildet.

Das Dokument 100 kann ferner eine oder mehrere Antenne 112 aufweisen. Die Antenne 112 ist mit dem Modul 110 verbunden. Die Antenne 112 kann für die Energieversorgung des integrierten Schaltkreises 108, des Treibers 104 und/oder der Anzeige 102 dienen. Hierzu wird von einem externen Gerät elektrische Energie mit Hilfe der Antenne 112 eingekoppelt. Alternativ oder zusätzlich dient die Antenne 112 zur drahtlosen Kommunikation mit einem externen Gerät, beispielsweise über ein RFID-Verfahren.

Der integrierte elektronische Schaltkreis 108 generiert ein Steuersignal, das über die Datenleitung 106 zu dem Treiber 104 übertragen wird. Durch das Steuersignal wird der Treiber 104 so angesteuert, so dass über die Anzeige 102 ein maschinenlesbares optisches Signal ausgegeben wird.

Beispielsweise ist die Anzeige 102 als Segment- oder Matrixdisplay ausgebildet. Die Ausgabe des maschinenlesbaren optischen Signals erfolgt dann beispielsweise durch Ansteuerung von einem oder mehreren der Anzeigeelemente durch den Treiber 104. Dem über die Anzeige 102 ausgegebenen optischen Signal ist aufgrund einer entsprechenden Ansteuerung des Treibers 104 von den integrierten elektronischen Schaltkreis 108 eine Information aufmoduliert, beispielsweise durch Amplituden-, Pulsweiten-, Phasen- und/oder Frequenzmodulation.

Wenn das optische Signal eine Frequenz zum Beispiel von über 100 Hz aufweist, kann es von einem Benutzer aufgrund der Augenträgheit weder visuell noch kognitiv erfasst werden, sondern wird - wenn überhaupt - als diffuses Flimmern wahrgenommen. Ausführungsformen des Dokuments 100 ermöglichen alternativ oder zusätzlich die Ausgabe des maschinenlesbaren optischen Signals in einer visuell durch den Benutzer erfassbaren Form, beispielsweise in Form eines 2D-Bar-Codes oder dergleichen. Auch in diesem Fall kann jedoch das optische Signal von dem Benutzer nicht kognitiv erfasst werden, da dieses ausschließlich für die maschinelle Auswertung und Weiterverarbeitung vorgesehen ist. Weiter kann das Signal unter der Wahrnehmschwelle des Menschen liegen, beispielsweise aufgrund von dessen geringer absoluter Helligkeit oder aufgrund geringer Helligkeitsänderungen bei einer. Helligkeitsmodulation.

Insbesondere können über die Anzeige 102 in Form des maschinenlesbaren optischen Signals sensitive Informationen, wie zum Beispiel kryptographische Schlüssel, verschlüsselte und/oder signierte Informationen, Transaktionsnummern, Berechtigungsinformationen, Personalisierungsdaten, biometrische Daten und dergleichen ausgegeben werden. Ergänzend können diese Informationen ganz oder teilweise auch im Klartext durch entsprechende Ansteuerung des Treibers 104 seitens des integrierten elektronischen Schaltkreises 108 auf der Anzeige 102 dargestellt werden. Ferner ist es möglich, dass bestimmte Informationen nur in Form des maschinenlesbaren optischen Signals und andere Informationen nur im Klartext über die Anzeigevorrichtung ausgegeben werden.

Alternativ oder zusätzlich zu der Antenne 112 kann das Dokument 100 über eine interne Energiequelle wie zum Beispiel eine Batterie oder eine Solarzelle verfügen. Für eine externe Energieversorgung über die Antenne 112 kann diese beispielsweise als Spule, Dipol oder in Form von kapazitiven Flächen ausgebildet sein. Die Antenne 112 kann zum Beispiel nur für die Energieversorgung der Anzeige 102 und/oder des integrierten elektronischen Schaltkreises 108 und/oder des Treibers 104 verwendet werden oder sie kann alternativ oder zusätzlich auch für den Aufbau einer Kommunikationsverbindung zum Senden und/oder Empfangen von Daten von einem externen Gerät verwendet werden, insbesondere einer RFID Kommunikationsverbindung.

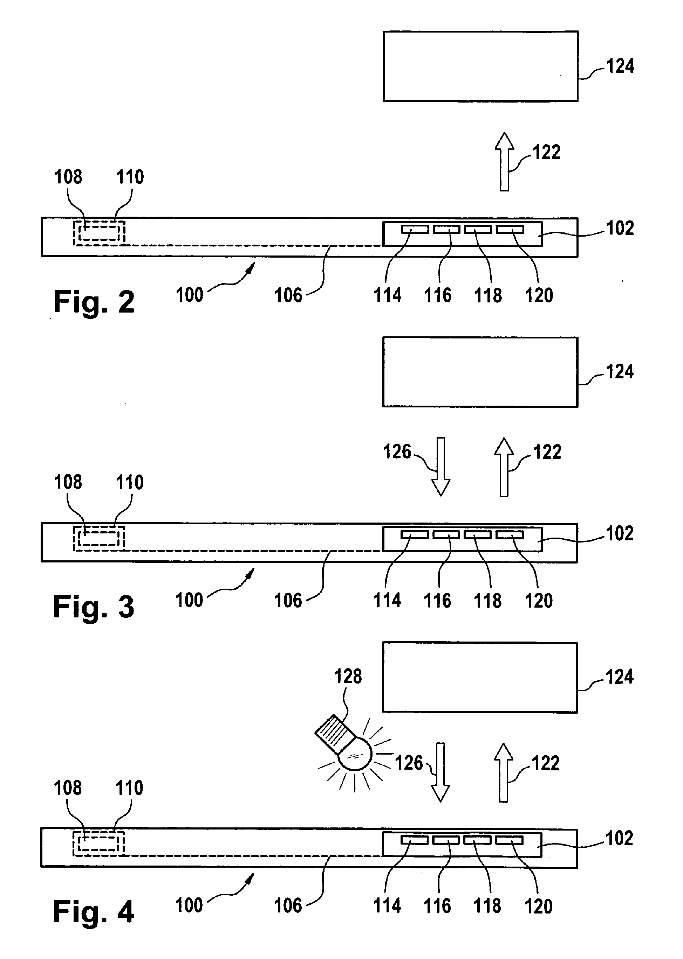

Die Figur 2 zeigt einen schematischen Querschnitt durch eine Ausführungsform eines erfindungsgemäßen Dokuments 100. Bei dieser Ausführungsform ist die Anzeigevorrichtung 102 in Anzeigeelemente oder Segmente 114, 116, 118 und 120 aufgeteilt, d.h. es handelt sich um ein Segment-/Aktiv- oder Passivmatrixdisplay. Eines oder mehrere der Segmente 114 bis 120 werden von dem integrierten elektronischen Schaltkreis 108 über den Treiber 104 zur Ausgabe eines maschinenlesbaren optischen Signals 122 angesteuert, welches von einem externen Gerät 124 empfangen wird. Das Gerät 124, welches hier als Lesegerät ausgebildet ist, demoduliert das optische Signal 122, um die darin empfangenen Informationen zu erhalten. Diese Informationen werden durch das Gerät 124 maschinell weiterverarbeitet und/oder ausgegeben, beispielsweise für Kontrollzwecke.

In der Ausführungsform der Figur 3 ist die Anzeige 102 des Dokuments 100 auch zur optischen Signalerfassung ausgebildet. Ein von dem Gerät 124 abgestrahltes optisches Signal 126 wird von dem Dokument 100 mit Hilfe der Anzeige 102 empfangen. Das mit Hilfe der Anzeige 102 erfasste optische Signal 126 trägt beispielsweise eine Kennung, ein Chiffrat, einen kryptographischen Schlüssel oder eine andere Nutzinformation, die von dem integrierten elektronischen Schaltkreis 108 weiterverarbeitet wird. Beispielsweise wird als Reaktion auf den Empfang des optischen Signals 126 von dem integrierten elektronischen Schaltkreis 108 ein weiteres optisches Signal 122 generiert und über die Anzeigevorrichtung 102 zum Empfang durch das Gerät 124 ausgegeben.

Zur Realisierung der Anzeige- und Signalerfassungsfunktionen der Anzeigevorrichtung 102 kann diese zwei separate angeordnete Anzeige- bzw. Sensorelemente aufweisen. Diese Elemente können auch matrixförmig angeordnet sein. Die Anzeigeelemente und die Sensorelementen können übereinander oder nebeneinander angeordnet sein. Gemäß der Ausführungsform der Figur 4 hat die Anzeigevorrichtung 102 nur eine einzige Anzeige, wobei die Segmente 114 bis 120 als Fluoreszenz-Anzeigeelemente ausgebildet sind. Bei der Anzeige 102 handelt es sich also bei der hier betrachteten Ausführungsform um eine Photolumineszenz-Löschungsanzeige (Field Quenching Photoluminescence Emission Device - FQPED). Zur Anregung der Photolumineszenz, insbesondere der Fluoreszenz, wird die Anzeige 102 von einer Strahlungsquelle 128 bestrahlt. Die Strahlungsquelle 128 kann als separate Komponente oder als integraler Bestandteil des Geräts 124 ausgeführt sein.

Die von der Strahlungsquelle 128 erzeugte Strahlung hat eine Frequenz, die zur Anregung eines Photolumineszenzeffekts der Anzeigeelemente der Anzeige 102 geeignet ist. Beispielsweise handelt es sich hierbei um Strahlung im nicht sichtbaren UV-Bereich. Dadurch ist ein zusätzlicher Schutz gegen nicht autorisierte Verwendung des Dokuments 100 gegeben, da die Eingabe des optischen Signals 126 die gleichzeitige Bestrahlung der Anzeige 102 mit solcher Strahlung im nicht sichtbaren UV-Bereich voraussetzt.

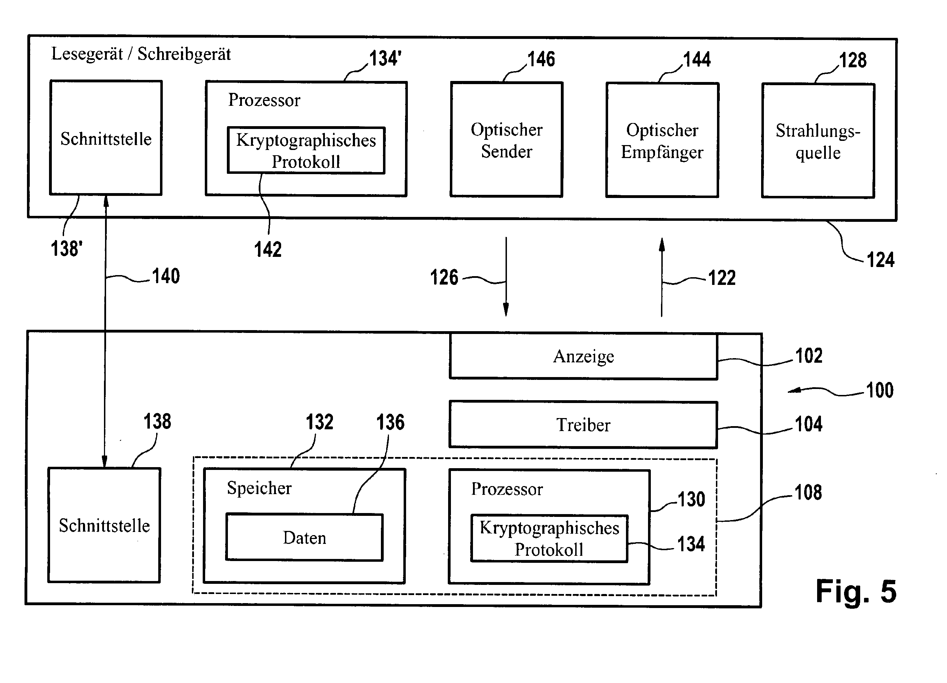

Die Figur 5 zeigt eine Ausführungsform des Dokuments 100 mit einem Prozessor 130 und einem elektronischen Speicher 132. Der Prozessor 130 und der Speicher 132 können als ein integrierter elektronischer Schaltkreis 108 realisiert sein. Auch der Treiber 104 kann als Teil des integrierten elektronischen Schaltkreises 108 realisiert sein. Der Prozessor 130 dient zur Ausführung von Programminstruktionen 134. Durch Ausführung der Programminstruktionen 134 werden die das Dokument 100 betreffenden Schritte eines kryptographischen Protokolls durchgeführt. Der elektronische Speicher 132 dient zur Speicherung von Daten 136, wie zum Beispiel von Personalisierungsdaten.

Das Dokument 100 hat eine Schnittstelle 138 zum Aufbau einer Kommunikationsverbindung 140 mit einer entsprechenden Schnittstelle 138' des Geräts 124. Die Schnittstelle 138 ist vorzugsweise als RFID-Schnittstelle ausgebildet und beinhaltet eine Antenne 112 (vgl. die Ausführungsform der Figur 1).

Das Gerät 124 ist in der Ausführungsform der Figur 5 als Lese- und Schreibgerät ausgebildet. Das Gerät 124 hat einen Prozessor 142 zur Ausführung von Programminstruktionen 134'. Durch Ausführung der Programminstruktionen 134' werden die das Gerät 124 betreffenden Schritte des kryptographischen Protokolls ausgeführt.

Das Gerät 124 hat einen optischen Empfänger 144 zum Empfang des maschinenlesbaren optischen Signals 122 von der Anzeigevorrichtung 102. Bei dem optischen Empfänger 144 handelt es sich zum Beispiel um einen CCD-Sensor.

Das Gerät 124 hat ferner einen optischen Sender 146 zum Senden des optischen Signals 126 zur Erfassung durch die Anzeigevorrichtung 102. Der optische Sender 146 kann zum Beispiel als ein oder mehrere Dioden ausgebildet sein.

Aufgrund der Ausführung der Programminstruktionen 134 steuert der Prozessor 130 den Treiber 104 zur Ausgabe des optischen Signals 122 an, wobei der Prozessor 130 dem optischen Signal die auszugebende Information aufmoduliert, beispielsweise mit Hilfe einer Amplituden-, Pulsweiten-, Phasen- und/oder Frequenzmodulation. Bei dem optischen Signal 122 kann es sich um ein serielles oder ein paralleles optisches Signal handeln. Ferner können auch mehrere optische Signale 122 gleichzeitig oder zeitlich nacheinander über die Anzeige 102 ausgegeben werden. Bei der Ausgabe des optischen Signals 122 werden ein oder mehrere der Segmente der Anzeige 102 (vgl. Segmente 114, 116, 118 und 120, Figuren 2 bis 4) angesteuert werden.

Ebenso kann der Prozessor 130 aufgrund der Ausführung der Programminstruktionen 134 den Treiber 104 zur Ansteuerung der Anzeige 102 für die Erfassung des optischen Signals 126 ansteuern. Die dadurch erhaltenen Informationen können durch den Prozessor 130 weiterverarbeitet werden, um auf dieser Grundlage beispielsweise ein oder mehrere weitere optische Signale 120 zu generieren und über die Anzeige 102 auszugeben.

Die Datenübertragung zwischen dem Dokument 100 und dem Gerät 124 kann sowohl seriell als auch parallel erfolgen. Im ersten Fall wird die Information durch eine zeitliche Veränderung des auf der Anzeige 102 dargestellten Inhalts übertragen und im zweiten Fall durch die 2-Dimensionalität der auf der Anzeige 102 dargestellten Information. Zum Austausch größerer Datenmengen können auch die serielle und die parallele Datenübertragung miteinander kombiniert werden.

Der Aufbau der Anzeige 102 kann vollflächig sein, zum Beispiel um eine 1-Bit-Information zu übertragen, oder die Anzeige kann als segmentiertes Display, als Passivmatrixdisplay oder als Aktivmatrixdisplay ausgebildet sein.

Vorzugsweise ist die Anzeige 102 als Photolumineszenz-Löschungsanzeige ausgebildet, da in diesem Fall mit einer einziger Matrix sowohl die Ausgabe des optischen Signals 122 als auch die Erfassung des optischen Signals 126 erfolgen kann. Ferner kann durch die Notwendigkeit der Beaufschlagung der Anzeige 102 mit einer Strahlung ein zusätzliches Sicherheitsmerkmal realisiert werden.

Jedoch ist die vorliegende Erfindung nicht auf eine bestimmte Anzeigetechnologie beschränkt, sondern es können auch andere Anzeigetechnologien verwendet werden, wie zum Beispiel Photolumineszenz-Löschungsanzeigen, elektrophoretische Anzeigen, elektrochrome Anzeigen, Flüssigkeitskristallanzeigen (LCD), LED-Anzeigen, insbesondere anorganische LED oder organische LED-Anzeigen (OLED), Drehelementanzeigen, Balkenanzeigen oder Anzeigen auf Basis des Elektrowetting-Effektes oder Hybridanzeigne oder dergleichen. Bei der Verwendung einer Anzeigetechnologie, die nicht gleichzeitig für die optische Signalerfassung geeignet ist, kann die Anzeige 102 eine weitere Matrix mit optischen Sensorelementen für die Signalerfassung beinhalten. Bei dieser Matrix kann es sich zum Beispiel um ein CCD-Array handeln.

Das Dokument 100 muss nicht über eine eigene Energieversorgungsquelle, wie zum Beispiel eine Batterie verfügen, wenn die Energieversorgung über die Schnittstelle 138 erfolgt. Beispielsweise wird in die Schnittstelle 138 von der Schnittstelle 138' des Geräts 124 elektrische Energie eingekoppelt, die zur Versorgung des integrierten elektronischen Schaltkreises 108, des Treibers 104 und/oder der Anzeige 102 dient. Dies ist insbesondere vorteilhaft, um die Funktionsfähigkeit des Dokuments über seine gesamte Laufzeit hin zu gewährleisten. Von besonderem Vorteil ist dabei, wenn die Schnittstelle 138 als kontaktlose Schnittstelle ausgebildet ist, da dann auch das Problem der Korrosion und Abnutzung der Kontakte der Schnittstelle über die Laufzeit des Dokuments entfällt.

Bei den in dem elektronischen Speicher 132 gespeicherten Daten 136 des Dokuments 100 kann es sich um Personalisierungsdaten handeln, wie zum Beispiel den Namen, die Adresse, ein Gesichtsbild, Fingerabdruckdaten und eine Unterschrift des Trägers des Dokuments. Die Ausgabe dieser Daten in Form des optischen Signals 122 und/oder über die Schnittstelle 138 aus dem Dokument 100 kann an die Bedingung der vorherigen erfolgreichen Durchführung des kryptographischen Protokolls geknüpft sein.

Zum Lesen der Daten 136 mit Hilfe des Geräts 124 wird beispielsweise wie folgt vorgegangen:
Das Dokument 100 wird in die Nähe des Geräts 124 gebracht, so dass elektrische Energie in das Dokument über dessen Schnittstelle 138 eingekoppelt wird. Dadurch wird die Ausführung der Programminstruktionen 134 durch den Prozessor 130 gestartet.
Durch Ausführung der Programminstruktionen 134 wird eine Kennung, wie zum Beispiel eine Zufallszahl, generiert. Die Kennung wird über die Anzeige 102 durch entsprechende Modulation des optischen Signals 122 ausgegeben und mit Hilfe des optischen Empfängers 144 des Geräts 124 empfangen.

Durch Ausführung der Programminstruktionen 134' bewirkt der Prozessor 142 daraufhin, dass aus der so empfangenen Kennung und einem geheimen Schlüssel ein weiterer Schlüssel gewonnen wird, der für die Durchführung des kryptographischen Protokolls verwendet wird. Beispielsweise wird auf diese Art und Weise ein symmetrischer oder ein asymmetrischer Schlüssel generiert, der für die erfolgreiche Durchführung des kryptographischen Protokolls erforderlich ist.

In einer Ausführungsform der Erfindung wird beispielsweise aus der Kennung und einem geheimen Schlüssel ein asymmetrisches Schlüsselpaar bestehend aus einem geheimen und einem öffentlichen Schlüssel generiert. Der öffentliche Schlüssel wird daraufhin von dem Gerät 124 über dessen Schnittstelle 138' und die Kommunikationsverbindung 140 oder dessen optischen Sender 146 als optisches Signal 126 an das Dokument 100 übertragen. Dieser öffentliche Schlüssel wird beispielsweise zur anschließenden Durchführung eines Challenge-Response-Verfahrens verwendet.

Nachdem das kryptographische Protokoll erfolgreich abgearbeitet worden ist, werden die Daten 136 von dem Prozessor 130 aus dem elektronischen Speicher 132 ausgelesen und ganz oder teilweise auf der Anzeige 102 im Klartext angezeigt und/oder als maschinenlesbares optisches Signal 122 und/oder über die Kommunikationsverbindung 140 an das Gerät 124 übertragen.

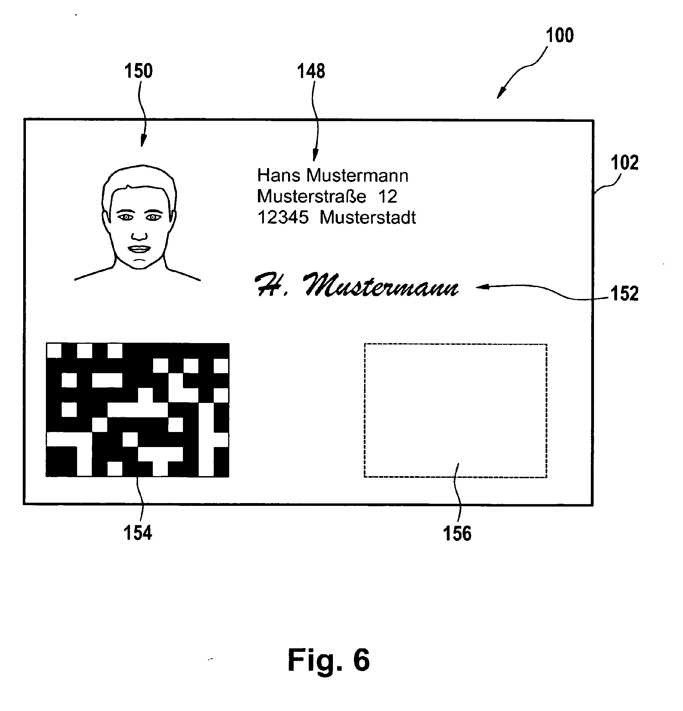

Die Figur 6 zeigt ein Beispiel einer Ausgabe auf der Anzeige 102. Auf der Anzeige 102 werden im Klartext in einer für den Benutzer unmittelbar visuell und kognitiv erfassbaren Form in einem Ausgabefeld 148 der Name und die Anschrift des Trägers des Dokuments 100, in einem Ausgabefeld 150 dessen Gesichtsbild und in einem Ausgabefeld 152 dessen eingescannte Unterschrift angezeigt.

Ferner wird in einem Ausgabefeld 152 ein 2D-Bar-Code in einer visuell für den Benutzer unmittelbar erfassbaren Form ausgegeben. Der 2D-Bar-Code kann beispielsweise Fingerabdruckdaten oder andere sensitive Informationen, wie zum Beispiel einen Schlüssel, ein Chiffrat, eine Signatur oder eine Transaktionsnummer oder dergleichen beinhalten. Der auf dem Ausgabefeld 154 angezeigte 2D-Bar-Code ist für den Benutzer nur rein visuell wahrnehmbar, entzieht sich aber dessen kognitiven Fassungsvermögens, da ein 2D-Bar-Code für einen menschlichen Nutzer nicht interpretierbar ist.

Der 2D Barcode kann auch als Modulation zum Beispiel eines Fotos dargestellt werden, wobei z.B. zunächst ein erstes Bild zur Anzeige des Fotos und dann ein zweites Bild zur Anzeige des Fotos und ein dem Foto überlagerter 2D Barcode dargestellt werden. Für den Menschen soll in beiden Fällen nur das Foto wahrnehmbar sein; dies ist z.B. dadurch möglich, dass die Überlagerung des Fotos mit dem 2D Barcode unterhalb der Wahrnehmungsschwelle des Menschen liegt. Die Daten des 2D Barcodes können durch Subtraktion der ersten und zweiten Bilder maschinell rekonstruiert werden.

Die Anzeige 102 kann ein weiteres Ausgabefeld 156 aufweisen, welches zur Ausgabe eines für den Benutzer weder visuell noch kognitiv erfassbaren maschinenlesbaren optischen Signals (vgl. das optische Signal 122 der Figuren 2 bis 5) vorgesehen ist.

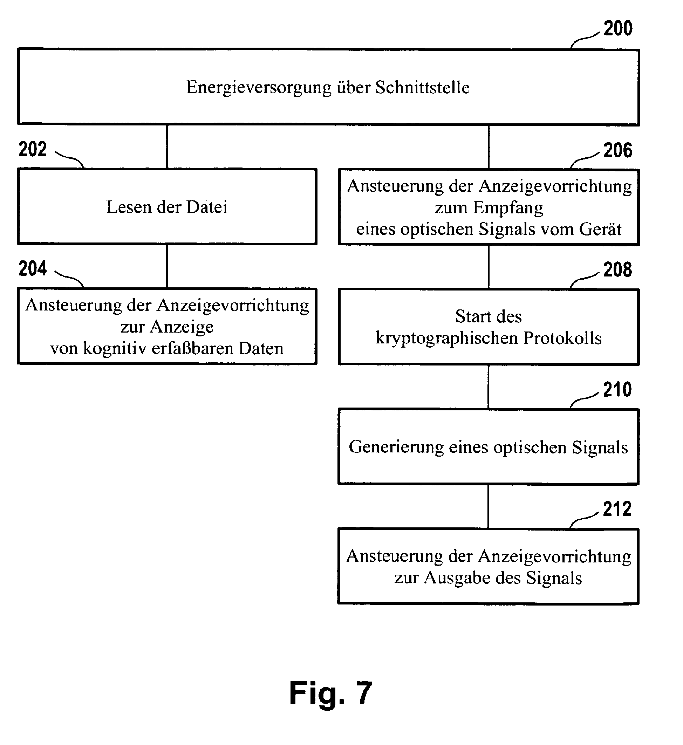

Die Figur 7 zeigt ein Flussdiagramm einer Ausführungsform eines erfindungsgemäßen Verfahrens. In dem Schritt 200 wird elektrische Energie über die Schnittstelle des Dokuments eingekoppelt, beispielsweise von einem externen Schreib- und/oder Lesegerät. Daraufhin werden in dem Schritt 202 nicht oder nur wenig sensitive Daten aus einem elektronischen Speicher des Dokuments gelesen und in dem Schritt 204 auf einer Anzeigevorrichtung des Dokuments ausgegeben, wobei die Anzeige in einer für einen menschlichen Benutzer visuell und kognitiv ohne Weiteres erfassbaren Form, wie zum Beispiel im Klartext, erfolgt.

Nach dem Schritt 200 wird ferner ein Schritt 206 durchgeführt, in dem die Anzeigevorrichtung des Dokuments zum Empfang eines optischen Signals von dem externen Gerät angesteuert wird. Aufgrund der von dem externen Gerät über das optische Signal empfangenen Informationen wird in dem Schritt 208 ein kryptographisches Protokoll gestartet.

Nach erfolgreicher Durchführung des kryptographischen Protokolls werden in dem Schritt 210 sensitive Daten aus dem elektronischen Speicher des Dokuments gelesen, wie zum Beispiel Fingerabdruckdaten, und es wird ein entsprechendes optisches Signal generiert, welches durch entsprechende Ansteuerung der Anzeigevorrichtung in dem Schritt 212 zum Empfang durch das externe Gerät ausgegeben wird.

### Bezugszeichenliste

| | |
|---|---|
| 100 | Dokument |
| 102 | Anzeige |
| 104 | Treiber |
| 106 | Datenleitung |
| 108 | integrierter elektronischer Schaltkreis |
| 110 | Modul |
| 112 | Antenne |
| 114 | Segment |
| 116 | Segment |
| 118 | Segment |
| 120 | Segment |
| 122 | optisches Signal |
| 124 | Gerät |
| 126 | optisches Signal |
| 128 | Strahlungsquelle |
| 130 | Prozessor |
| 132 | Speicher |
| 134 | Programminstruktionen |
| 134' | Programminstruktionen |
| 136 | Daten |
| 138 | Schnittstelle |
| 140 | Kommunikationsverbindung |
| 142 | Prozessor |
| 144 | Empfänger |
| 146 | Sender |
| 148 | Ausgabefeld |
| 150 | Ausgabefeld |
| 152 | Ausgabefeld |
| 154 | Ausgabefeld |
| 156 | Ausgabefeld |

## Patentansprüche

1. Wert- oder Sicherheitsdokument mit einer Anzeigevorrichtung (102, 104, 106, 108) zur Ausgabe eines maschinenlesbaren optischen Signals (122), welches durch einen Benutzer nicht kognitiv erfassbar ist, **dadurch gekennzeichnet, dass** die Anzeigevorrichtung zur Erfassung eines optischen Signals (126) ausgebildet ist.

2. Wert- oder Sicherheitsdokument nach Anspruch 1, **dadurch gekennzeichnet, dass** die Anzeigevorrichtung zur Anzeige von Daten zur kognitiven Erfassung durch einen Benutzer ausgebildet ist.

3. Wert- oder Sicherheitsdokument nach Anspruch 1 oder 2, **dadurch gekennzeichnet, dass** es sich bei der Anzeigevorrichtung um eine Photolumineszenz-Löschungsanzeige, eine elektrophoretische Anzeige, eine elektrochrome Anzeige, eine Flüssigkeitskristallanzeige (LCD), LED-Anzeige, insbesondere anorganische LED oder organische LED-Anzeige (OLED), Drehelementanzeige, Balkenanzeige oder einer Anzeige auf Basis des Elektrowetting-Effektes oder eine Hybridanzeige handelt.

4. Wert- oder Sicherheitsdokument nach einem der vorhergehenden Ansprüche, **dadurch gekennzeichnet, dass** die Anzeigevorrichtung segmentiert (114, 116, 118, 118) ist.

5. Wert- oder Sicherheitsdokument nach einem der vorhergehenden Ansprüche, mit einem integrierten elektronischen Schaltkreis (108) zur Ansteuerung der Anzeigevorrichtung für eine Modulation des optischen Signals (122), beispielsweise für eine Amplitudenmodulation, Pulsweitenmodulation, Phasenmodulation und/oder Frequenzmodulation.

6. Wert- oder Sicherheitsdokument nach einem der vorhergehenden Ansprüche, mit einem integrierten elektronischen Schaltkreis (108) zur Durchführung eines kryptographischen Protokolls, wobei die Ausgabe des maschinenlesbaren optischen Signals von der Durchführung des kryptographischen Protokolls abhängt.

7. Wert- oder Sicherheitsdokument nach Anspruch 6, **dadurch gekennzeichnet, dass** der integrierte elektronische Schaltkreis zur Verwendung einer von der Anzeigevorrichtung erfassten Information für die Durchführung des kryptographischen Protokolls ausgebildet ist.

8. Wert- oder Sicherheitsdokument nach einem der vorhergehenden Ansprüche, **dadurch gekennzeichnet, dass** es sich um ein Ausweisdokument, insbesondere einen Personalausweis, einen Reisepass, ein Visum oder einen Firmenausweis, eine Kreditkarte, einen Führerschein, einen Berechtigungsnachweis oder dergleichen handelt.

9. Wert- oder Sicherheitsdokument nach einem der vorhergehenden Ansprüche, **dadurch gekennzeichnet, dass** die Anzeigevorrichtung zur Ausgabe eines Schlüssels, verschlüsselter Information, signierter Information, einer Transaktionsnummer, eines Bar-Codes, einer Gültigkeitsdauer, einer Berechtigungsinformation, von Personalisierungsdaten, aus einem Speicher des Wert- oder Sicherheitsdokuments ausgelesenen Daten und/oder von einem integrierten elektronischen Schaltkreis (108) generierten Daten ausgebildet ist, wobei die Ausgabe mittels des maschinenlesbaren optischen Signals (122) und/oder durch die Anzeige zur kognitiven Erfassung durch einen Benutzer erfolgt.

10. Wert- oder Sicherheitsdokument nach einem der vorhergehenden Ansprüche, mit einer Schnittstelle (112; 138) zur Energieversorgung und/oder zur Herstellung einer Kommunikationsverbindung (140).

11. Wert- oder Sicherheitsdokument nach Anspruch **dadurch gekennzeichnet, dass** die Schnittstelle drahtlos ausgebildet ist.

12. Wert- oder Sicherheitsdokument nach einem der vorhergehenden Ansprüche, **dadurch gekennzeichnet, dass** das maschinenlesbare optische Signal als Überlagerung einer zumindest visuell durch den Benutzer wahrnehmbaren Anzeige ausgegeben wird, wobei es sich bei der wahrnehmbaren Anzeige insbesondere um die Anzeige von Daten im Klartext und/oder einer graphischen Darstellung und/oder eines Fotos handelt.

13. Kommunikationsverfahren für ein wert- oder Sicherheitsdokument (100), **dadurch gekennzeichnet, dass** wobei eine Datenausgabe durch Ausgabe eines maschinenlesbaren optischen Signals (122) über eine Anzeigevorrichtung (102) des Wert- oder Sicherheitsdokuments erfolgt, wobei das maschinenlesbare optische Signal durch einen Benutzer nicht kognitiv erfassbar ist, **dadurch gekennzeichnet, dass** die Anzeigevorrichtung als optischer Sensor für die Erfassung eines optischen Signals (126) verwendet wird.

14. Kommunikationsverfahren nach Anspruch 13, **dadurch gekennzeichnet, dass** zur kognitiven Erfassung durch einen Benutzer vorgesehene Daten (148, 150, 152) auf der Anzeigevorrichtung angezeigt werden.

15. Kommunikationsverfahren nach Anspruch 13, **dadurch gekennzeichnet, dass** mit dem optischen Signal (126) eine Information empfangen wird, die für die Durchführung eines kryptographischen Protokolls verwendet wird.

## Claims

1. A value or security document, comprising a display device (102, 104, 106, 108) for outputting a machine-readable optical signal (122) that cannot be cognitively detected by a user, **characterized in that** the display device is designed to detect an optical signal (126).

2. The value or security document according to claim 1, **characterized in that** the display device is designed to display data for cognitive detection by a user.

3. The value or security document according to claim 1 or 2, **characterized in that** the display device is a photoluminescence quenching display, an electrophoretic display, an electrochromic display, a liquid crystal display (LCD), an LED display, in particular an inorganic LED or organic LED display (OLED), a rotary element display, a bar display or a display based on the electrowetting effect, or a hybrid display.

4. A value or security document according to any one of the preceding claims, **characterized in that** the display device is segmented (114, 116, 118, 118).

5. A value or security document according to any one of the preceding claims, comprising an integrated electronic circuit (108) for controlling the display device so as to modulate the optical signal (122), for example for amplitude modulation, pulse width modulation, phase modulation and/or frequency modulation.

6. A value or security document according to any one of the preceding claims, comprising an integrated electronic circuit (108) for executing a cryptographic protocol, wherein the machine-readable optical signal is output depending on the execution of the cryptographic protocol.

7. The value or security document according to claim 6, **characterized in that** the integrated electronic circuit is designed to use information that is detected by the display device for the execution of the cryptographic protocol.

8. A value or security document according to any one of the preceding claims, **characterized in that** the document is an identification document, in particular an identification card, a passport, a visa or a company ID card, a credit card, a driver's license, a proof of authorization or the like.

9. A value or security document according to any one of the preceding claims, **characterized in that** the display device is designed to output a key, encrypted information, signed information, a transaction number, a bar code, a validity term, authorization information, personalization data, data read from a memory of the value or security document and/or data generated by an integrated electronic circuit (108), wherein the output takes place by way of the machine-readable optical signal (122) and/or by the display for cognitive detection by a user.

10. A value or security document according to any one of the preceding claims, comprising an interface (112; 138) for supplying energy and/or for establishing a communication connection (140).

11. The value or security document according to claim 10, **characterized in that** the interface is wireless.

12. A value or security document according to any one of the preceding claims, **characterized in that** the machine-readable optical signal is issued as a superimposition with a display that can be perceived by the user at least visually, wherein the perceivable display is in particular the display of data in plain text and/or a graphical representation and/or a photo.

13. A communication method for a value or security document (100), wherein data is output by outputting a machine-readable optical signal (122) via a display device (102) of the value or security document, wherein the machine-readable optical signal cannot be cognitively detected by a user, **characterized in that** the display device is used as an optical sensor for detecting an optical signal (126).

14. The communication method according to claim 13, **characterized in that** data (148, 150, 152) that is intended for cognitive detection by a user is displayed on the display device.

15. The communication method according to claim 13, **characterized in that** information that is used to execute a cryptographic protocol is received with the optical signal (126).

## Revendications

1. Document de valeur ou de sécurité avec un dispositif indicateur (102, 104, 106, 108) pour l'émission d'un signal optique lisible par machine (122) et non détectable de façon cognitive par un utilisateur, **caractérisé en ce que** le dispositif indicateur est conçu pour la détection d'un signal optique (126).

2. Document de valeur ou de sécurité selon la revendication 1, **caractérisé en ce que** le dispositif indicateur est conçu pour l'indication de données perceptibles de façon cognitive par un utilisateur.

3. Document de valeur ou de sécurité selon la revendication 1 ou 2, **caractérisé en ce que** le dispositif indicateur est un indicateur d'effacement photoluminescent, un indicateur électrophorétique, un indicateur électrochrome, un indicateur à cristaux liquides (LCD), un indicateur DEL, en particulier un indicateur DEL inorganique ou DEL organique (DELO), un indicateur à élément rotatif, un indicateur en poutre ou un indicateur à base d'effet d'électro-mouillage ou un indicateur hybride.

4. Document de valeur ou de sécurité selon l'une des revendications précédentes, dans lequel le dispositif indicateur est segmenté (114, 116, 118, 118).

5. Document de valeur ou de sécurité selon l'une des revendications précédentes, avec un circuit électronique intégré (108) pour l'actionnement du dispositif indicateur en vue d'une modulation du signal optique (122), par exemple une modulation d'amplitude, une modulation de largeur d'impulsion, une modulation de phase et/ou une modulation de fréquence.

6. Document de valeur ou de sécurité selon l'une des revendications précédentes, avec un circuit électronique intégré (108) pour l'exécution d'un protocole cryptographique, dans lequel l'émission du signal optique lisible par machine dépend de l'exécution du protocole cryptographique.

7. Document de valeur ou de sécurité selon la revendication 6, **caractérisé en ce que** le circuit électronique intégré est conçu pour l'utilisation d'une information détectée par le dispositif indicateur, pour l'exécution du protocole cryptographique.

8. Document de valeur ou de sécurité selon l'une des revendications précédentes, **caractérisé en ce qu'**il s'agit d'un document d'identité, en particulier d'une carte d'identité, d'un passeport, d'un visa ou d'une carte d'identification d'entreprise, d'une carte de crédit, d'un permis de conduire, d'une certificat d'autorisation ou autre.

9. Document de valeur ou de sécurité selon l'une des revendications précédentes, **caractérisé en ce que** le dispositif indicateur est conçu pour délivrer une clé, une information cryptée, une information signée, un numéro de transaction, un code-barres, une durée de validité, une information d'autorisation, des données de personnalisation, des données lues à partir d'une mémoire du document de valeur ou de sécurité et/ou des données générées par un circuit électronique intégré (108), dans lequel la délivrance est effectuée au moyen du signal optique lisible par machine (122) et/ou par l'indicateur, pour la perception cognitive par un utilisateur.

10. Document de valeur ou de sécurité selon l'une des revendications précédentes, avec une interface (112 ; 138) pour l'alimentation en énergie et/ou pour la mise en place d'une liaison de communication (140).

11. Document de valeur ou de sécurité selon la revendication 10, **caractérisé en ce que** l'interface est conçu sans fil.

12. Document de valeur ou de sécurité selon l'une des revendications précédentes, **caractérisé en ce que** le signal optique lisible par machine est émis en superposition d'un indicateur au moins visuellement perceptible par l'utilisateur, dans lequel l'indicateur perceptible est en particulier un indicateur de données en langage clair et/ou une représentation graphique et/ou une photo.

13. Procédé de communication pour un document de valeur ou de sécurité (100), dans lequel une émission de données est réalisée par l'émission d'un signal optique lisible par machine (122), par le biais d'un dispositif indicateur (102) du document de valeur ou de sécurité (122), dans lequel le signal optique lisible par machine n'est pas perceptible de façon cognitive par une utilisateur, **caractérisé en ce que** le dispositif indicateur est utilisé comme capteur optique pour la détection d'un signal optique (126).

14. Procédé de communication selon la revendication 13, **caractérisé en ce que** des données (148, 150, 152) prévues pour la perception cognitive par un utilisateur sont indiquées sur le dispositif indicateur.

15. Procédé de communication selon la revendication 13, **caractérisé en ce que** le signal optique (126) permet de recevoir une information utilisée pour l'exécution d'un protocole cryptographique.
